# EUROPÄISCHE PATENTSCHRIFT

(11) **EP 3 186 430 B1**
(45) Veröffentlichungstag und Bekanntmachung des Hinweises auf die Patenterteilung: **20.10.2021**
(21) Anmeldenummer: 15756592.0
(22) Anmeldetag: 19.08.2015
(51) Int. Cl.: F16K 11/076, F16K 11/078, F16K 31/528, D06F 58/24

(54) **FLUIDANSCHLUSSVORRICHTUNG FÜR EIN HAUSHALTSGERÄT, SOWIE HAUSHALTSGERÄT MIT EINER SOLCHEN FLUIDANSCHLUSSVORRICHTUNG**
FLUID CONNECTION DEVICE FOR A DOMESTIC APPLIANCE, AND DOMESTIC APPLIANCE COMPRISING SUCH A FLUID CONNECTION DEVICE
DISPOSITIF DE RACCORD DE FLUIDE POUR APPAREIL MÉNAGER ET APPAREIL MÉNAGER ÉQUIPÉ DE CELUI-CI

(30) Priorität: 29.08.2014 DE 102014217355
(43) Veröffentlichungstag der Anmeldung: 05.07.2017
(73) Patentinhaber: BSH Hausgeräte GmbH, 81739 München (DE)
(72) Erfinder: DESPANG, Oliver, 15712 Königs Wusterhausen (DE); BÖMMELS, Ralf, 14612 Falkensee (DE); HENNIG, Holger, 12249 Berlin (DE)
(86) Internationale Anmeldenummer: PCT/EP2015/069000
(87) Internationale Veröffentlichungsnummer: WO 2016/030239

(56) Entgegenhaltungen:
- EP-A1- 1 914 340
- WO-A1-2008/138526
- DE-U1- 29 701 441
- GB-A- 2 105 452

## Beschreibung

Die Erfindung betrifft eine Fluidanschlussvorrichtung für ein Haushaltsgerät, aufweisend einen Druckanschluss, einen ersten Arbeitsleitungsanschluss und einen zweiten Arbeitsleitungsanschluss, wobei der erste Arbeitsleitungsanschluss an einer Seitenwand eines Ventilgehäuses angeordnet ist, in dem Ventilgehäuse ein Ventilschlitten angeordnet ist, der einen inneren aufweist, welcher Kanal eine seitliche erste Öffnung und eine zweite Öffnung an einer Stirnfläche des Ventilschlittens aufweist, wobei der Ventilschlitten in einer ersten Ventilstellung so weit in das Ventilgehäuse eingeschoben ist, dass der Druckanschluss mit dem ersten Arbeitsleitungsanschluss fluidisch verbunden ist und der Endbereich des Ventilschlittens zumindest teilweise in das Ventilgehäuse eingeführt ist, wobei der Druckanschluss in der ersten Ventilstellung von dem zweiten Arbeitsleitungsanschluss getrennt ist, der Ventilschlitten in einer zweiten Ventilstellung so in dem Ventilgehäuse positioniert ist, dass die erste Öffnung des Ventilschlittens mit dem Druckanschluss fluidisch verbunden und der Druckanschluss von dem ersten Arbeitsleitungsanschluss getrennt ist und der Endbereich des Ventilschlittens aus dem Ventilgehäuse vorragt, der Druckanschluss an der Seitenwand des Ventilgehäuses angeordnet ist, und der die zweite Öffnung aufweisende Endbereich des Ventilschlittens als der zweite Arbeitsleitungsanschluss ausgebildet ist.

Eine solche Fluidanschlussvorrichtung und ein entsprechendes Haushaltsgerät gehen hervor aus der GB 2 105 452 A.

Die Erfindung ist insbesondere vorteilhaft anwendbar auf Wäschepflegegeräte, insbesondere Wäschetrocknungsgeräte, insbesondere Kondensationstrockner oder Umlufttrockner.

Es ist ein Wäschetrockner bekannt, bei dem während eines Trocknungsverlaufs Kondensat anfällt. Dieses Kondensat kann einerseits mittels einer geräteinternen Pumpe in einen Kondensatbehälter innerhalb des Wäschetrockners gefördert werden. Der Kondensatbehälter ist durch den Nutzer des Gerätes zu entleeren. Andererseits kann das Kondensat durch Anschluss eines Schlauches oder ähnlichem an den Wäschetrockner mittels einer geräteinternen Pumpe nach außen (z.B. in einen Waschtisch) gepumpt werden. Um zwisehen diesen beiden Förderzweigen umzuschalten, ist es bekannt, einen Schlauch eines der beiden Förderzweige auf einen mit der Pumpe druckseitig verbundenen Stutzen aufzustecken. Zum Anschließen des anderen Förderzweigs wird der Schlauch abgezogen und ein Schlauch des anderen Förderzweigs auf den freigewordenen Stutzen aufgesteckt. Der abgezogene Schlauch wird in eine Parkposition gebracht. Dabei ist nachteilig, dass das durch einen Nutzer durchzuführende Anschließen des Schlauchs mit hohem Aufwand und Unbequemlichkeit verbunden ist. Zudem kann der zum Pumpen nach außen verwendete Schlauch verloren gehen. Wird vergessen, den Schlauch auf eine Förderung zu dem Kondensatbehälter umzustecken, kann dies leicht übersehen werden.

DE 10 2011 082 253 A1 offenbart ein Wäschetrocknungsgerät mit einer Auffangkammer zum Auffangen von Flüssigkeit und einem herausnehmbaren Sammelbehälter sowie folgenden weiteren Merkmalen: Der herausnehmbare Sammelbehälter weist ein Flüssigkeitsreservoir zum Sammeln von Flüssigkeit auf sowie einen integrierten Verbindungskanal, der gleitbar in einer röhrenartigen seitlichen Fortsetzung des herausnehmbaren Sammelbehälters entlang einer Längsachse der röhrenartigen seitli chen Fortsetzung angeordnet ist. Die röhrenartige seitliche Fortsetzung samt integriertem Verbindungskanal sind bei herausgenommenem Sammelbehälter gegenüber dem Flüssigkeitsreservoir mittels einer Klappe hydraulisch abgedichtet und die Auffangkammer ist bei herausgenommenem Sammelbehälter mittels einer weiteren Klappe hydraulisch abgedichtet, wohingegen bei in das Wäschetrocknungsgerät eingesetztem herausnehmbarem Sammelbehälter über den integrierten Verbindungskanal hinweg eine hydraulisch nutzbare Verbindung zwischen der Auffangkammer und dem herausnehmbaren Sammelbehälter besteht.

Die EP 2 574 696 A1 offenbart einen Wäschetrockner, aufweisend einen Kondensat-Aufnahmebehälter und ein Verfahren zum Ableiten von Kondensat aus dem Aufnahmebehälter, wobei der Kondensat-Aufnahmebehälter mit einem Behälterhauptkörper zum Speichern von durch den Wäschetrockner gebildetem Kondensat aufweist, wobei der Behälter eine Kopplungseinrichtung aufweist, die an einer Öffnung des Behälterhauptkörpers angeordnet ist und die zum Koppeln mit einer passenden Kopplungsvorrichtung des Wäschetrockners ausgebildet ist, wobei die Kopplungsvorrichtung ein Ventil aufweist, das an der Behälteröffnung zum Öffnen und Schließen der Behälteröffnung angeordnet ist, wobei das Ventil einen Ventilkörper mit einer ersten Dichtfläche und ein Ventilelement mit einer zweiten Dichtfläche aufweist, wobei das Ventilelement in dem Ventilkörper aufgenommen ist und durch ein Federelement derart vorgespannt ist, dass in einem geschlossenen Ventilzustand die zweite Dichtfläche gegen die erste Dichtfläche vorgespannt ist, wobei das Ventilelement so ausgebildet ist, dass es gegen die Vorspannkraft des Federelements betätigbar ist, wenn die Kopplungsvorrichtung und die Gegenkopplungsvorrichtung des Wäschetrockners betätigt werden, und wobei zumindest ein Teil des Ventilelementes eine Hohlprofilform mit Durchgängen durch die Profilwand aufweist, durch welche in einem offenen Ventilzustand Kondensat geleitet wird, wobei der Kondensat-Aufnahmebehälter genau und nur eine Öffnung zwischen dem Äußeren und dem Inneren des Behälters zum Durchführen des Kondensats durch die Kupplungsvorrichtung, um das Kondensat aus dem Kondensat-Speicherbehälter ablaufen zu lassen.

Die EP 0 767 268 A1 offenbart einen Kondensationswäschetrockner, der durch eine frontseitige Beladungsöffnung beladbar ist und durch eine Tür in Form eines Bullauges verschließbar ist. Das Bullauge in einem Rahmen untergebracht, der an einer Frontseite des Trockners angelenkt ist. Eine Dichtung zwischen dem Bullauge und der Frontseite des Trockners stellt sicher, dass die Tür wasserdicht ist. Eine Aufnahmekammer ist entnehmbar an dem Rahmen aufgehängt und teilweise in einem konkaven Bereich des Bullauges außerhalb des Trockners untergebracht. Die Kammer ist mit einer Beladungsöffnung versehen, die dann, wenn die Tür geschlossen ist, mit einem Rohr zum Zuführen von Kondensat durch ein Sicherheitsventil, das offen ist, wenn die Tür geschlossen ist und die Kammer an der Tür richtig angeordnet ist, verbunden, wobei die Kammer auch mit einer Entlüftungsöffnung und einer Überlauföffnung, die, wenn die Tür geschlossen wird, mit einem Rohr zum Sammeln von Überlauf in einem Kondensationsbehälter des Geräts verbunden ist.

Es ist die **Aufgabe** der vorliegenden Erfindung, die Nachteile des Standes der Technik zumindest teilweise zu überwinden und insbesondere eine einfach aufgebaute, nutzerfreundlichere und betriebssicherere Fluidstromumschaltung in einem Haushaltsgerät bereitzustellen, welche in einer Stellung einen Fluidablass nach außen zulässt.

Diese Aufgabe wird gemäß den Merkmalen der unabhängigen Patentansprüche gelöst. Bevorzugte Ausführungsformen sind insbesondere den abhängigen Patentansprüchen, der nachfolgenden Beschreibung und der beigefügten Zeichnung entnehmbar.

Die Aufgabe wird demnach gelöst durch eine Vorrichtung (im Folgenden ohne Beschränkung der Allgemeinheit als " Fluidanschlussvorrichtung " bezeichnet) für ein Haushaltsgerät, aufweisend einen Druckanschluss, einen ersten Arbeitsleitungsanschluss und einen zweiten Arbeitsleitungsanschluss, wobei der erste Arbeitsleitungsanschluss an einer Seitenwand eines Ventilgehäuses angeordnet ist, in dem Ventilgehäuse ein Ventilschlitten angeordnet ist, der einen inneren Kanal aufweist, welcher Kanal eine seitliche erste Öffnung und eine zweite Öffnung an einer Stirnfläche des Ventilschlittens aufweist, wobei der Ventilschlitten in einer ersten Ventilstellung so weit in das Ventilgehäuse eingeschoben ist, dass der Druckanschluss mit dem ersten Arbeitsleitungsanschluss fluidisch verbunden ist und der Endbereich des Ventilschlittens zumindest teilweise in das Ventilgehäuse eingeführt ist, der Druckanschluss in der ersten Ventilstellung von dem zweiten Arbeitsleitungsanschluss getrennt ist, der Ventilschlitten in einer zweiten Ventilstellung so in dem Ventilgehäuse positioniert ist, dass die erste Öffnung des Ventilschlittens mit dem Druckanschluss fluidisch verbunden und der Druckanschluss von dem ersten Arbeitsleitungsanschluss getrennt ist und der Endbereich des Ventilschlittens aus dem Ventilgehäuse vorragt, und bei der außerdem der Druckanschluss an der Seitenwand des Ventilgehäuses angeordnet ist, und bei der der die zweite Öffnung aufweisende Endbereich des Ventilschlittens als der zweite Arbeitsleitungsanschluss ausgebildet ist.

Diese Vorrichtung weist den Vorteil auf, dass der Endbereich des Ventilschlittens als Anschluss für eine externe Fluidleitung nutzbar ist. Die externe Fluidleitung mag z.B. ein Schlauch o.ä. sein und der Endbereich dann ein Schlauchanschluss. Die externe Fluidleitung kann nur dann von einem Nutzer auf den Endbereich des Ventilschlittens aufgesetzt werden, wenn sich dieser in der zweiten Ventilstellung befindet und damit aus dem Ventilgehäuse vorragt. Ist die externe Fluidleitung auf den vorragenden Endbereich aufgesetzt, kann der Ventilschlitten von einem Nutzer nicht in die erste Ventilstellung überführt werden. Das Anschließen der externen Fluidleitung, z.B. ein Aufstecken eines Schlauchs, ist insbesondere in der ersten Ventilstellung nicht oder nur unter stark erhöhter Schwierigkeit möglich, da sich andernfalls der Endbereich innerhalb des Ventilgehäuses befindet und somit verdeckt ist.

Es kann von dem Nutzer also keine Schlauchstellung verwechselt werden, so dass sich eine besonders verwechselungssichere und damit nutzerfreundlichere Fluidumschaltung in dem Haushaltsgerät ergibt. Die Nutzerfreundlichkeit wird auch dadurch erhöht, dass ein Nutzer nicht mehr zwei Schläuche o.ä. abwechselnd aufzustecken braucht. Darüber hinaus wird eine Betriebssicherheit verbessert, weil in der ersten Ventilstellung, bei der das Fluid geräteintern geführt wird und das Gerät nicht überwacht zu werden braucht, sich an dem ersten Arbeitsanschluss keine Fluidleitung ungewollt lösen kann, z.B. weil ein Nutzer einen Schlauch zu locker aufgesetzt hat. Die Fluidumschaltung ist zudem konstruktiv einfach, kompakt und preiswert umsetzbar.

Durch den Druckanschluss kann Fluid in die Fluidanschlussvorrichtung einströmen und wahlweise in der ersten Schaltstellung des Ventilschlittens mit dem ersten Arbeitsleitungsanschluss fluidisch verbunden werden und in der zweiten Schaltstellung des Ventilschlittens mit dem zweiten Arbeitsleitungsanschluss verbunden werden.

Die Fluidanschlussvorrichtung kann insbesondere als ein Mehrwegeventil, insbesondere 3/2-Wegeventil, ausgestaltet sein. Das 3/2-Wegeventil besitzt dann die drei angegebenen Anschlüsse und zwei Schalt- bzw. Ventilstellungen.

Das Ventilgehäuse mag eine rohrartige Grundform aufweisen.

Der Druckanschluss und der erste Arbeitsleitungsanschluss sind insbesondere an einem gleichen Längsabschnitt des Ventilgehäuses angeordnet, insbesondere sich gegenüberliegend. So wird ein besonders geringer Strömungswiderstand zwischen diesen beiden Anschlüssen erreicht. Jedoch können der Druckanschluss und der erste Arbeitsleitungsanschluss auch in Längsrichtung des Ventilgehäuses und/oder in Umfangsrichtung zueinander versetzt angeordnet sein.

Der Ventilschlitten ist in dem Ventilgehäuse insbesondere längsverschieblich angeordnet. Eine Längsrichtung des Ventilgehäuses mag insbesondere einer Verschiebungsrichtung des Ventilschlittens entsprechen.

Der zweite Arbeitsleitungsanschluss kann ohne Beschränkung der Allgemeinheit auch als ein "Schlauchanschluss" o.ä. bezeichnet werden. Er ist zum lösbaren Anschluss jeder geeigneten externen Fluidleitung geeignet, nicht nur eines Schlauchs. Der Schlauch kann z.B. einfach aufgesteckt, mit einem Adapterstück aufgeschraubt, mit einem Adapterstück aufgerastet usw. werden.

Es ist eine Ausgestaltung, dass der Ventilschlitten einen ersten Dichtabschnitt und einen zweiten Dichtabschnitt aufweist, die den Ventilschlitten gegen das Ventilgehäuse abdichten. Der erste Dichtabschnitt ist längsbeabstandet (d.h. beabstandet entlang einer Längsrichtung des Ventilgehäuses) zu dem zweiten Dichtabschnitt und in größerer Entfernung zu dem die zweite Öffnung aufweisenden Endbereich als der zweite Dichtabschnitt angeordnet. Zwischen den beiden Dichtabschnitten ist ein gegenüber dem Ventilgehäuse schmaler Zwischenabschnitt des Ventilschlittens vorhanden, wobei die erste Öffnung des Ventilschlittens in den ersten Dichtabschnitt mündet und in der ersten Ventilstellung der Zwischenabschnitt sich in einem gleichen Längsbereich befindet wie der Druckanschluss und der erste Arbeitsleitungsanschluss. Dadurch kann auf konstruktiv einfache Weise eine Strömungsumschaltung zwischen dem ersten und dem zweiten Arbeitsleitungsanschluss erreicht werden.

In der ersten Ventilstellung kann also durch den Druckanschluss einströmendes Fluid in das Ventilgehäuse gelangen, und zwar in den Zwischenabschnitt, da dieser schmal gegenüber einer inneren Kontur des Ventilgehäuses ist und somit ein erhebliches Volumen zwischen dem Ventilgehäuse und dem Zwischenabschnitt zur Aufnahme des Fluids vorhanden ist. Da sich auch der erste Arbeitsleitungsanschluss in dem von dem Zwischenabschnitt eingenommenen Längsabschnitt befindet, kann das in dem Zwischenraum zwischen dem Ventilgehäuse und dem Zwischenabschnitt befindliche Fluid dadurch abfließen. Ein Fluidfluss an den Dichtabschnitten vorbei in Längsrichtung des Ventilgehäuses wird durch deren Abdichtung gegenüber dem Ventilgehäuse verhindert.

Es ist eine Ausgestaltung davon, dass die erste Öffnung des Ventilschlittens in eine Seitenwand eines Dichtabschnitts mündet. In der zweiten Ventilstellung liegt der erste Dichtabschnitt auf dem Druckanschluss bzw. befindet sich der erste Dichtabschnitt an dem gleichen Längsabschnitt wie der Druckanschluss. Dabei liegt die erste Öffnung des Ventilschlittens dem Druckanschluss direkt gegenüber, so dass Fluid aus dem Druckanschluss in die erste Öffnung des Ventilschlittens und damit durch den inneren Kanal zu der zweiten Öffnung des Ventilschlittens fließen kann.

Es ist noch eine Ausgestaltung, dass an der Seitenwand des ersten Dichtabschnitts zwei längsbeabstandete Dichtelemente vorhanden sind, zwischen denen die erste Öffnung des Ventilschlittens in die Seitenwand mündet. So kann ein parasitärer Fluidstrom in Längsrichtung entlang der Seitenwand des ersten Dichtabschnitts verhindert werden.

Insbesondere für diese Ausgestaltung können die Dichtelemente einen oder mehrere Dichtringe, insbesondere O-Ringe, zur fluidischen Abdichtung gegen das Ventilgehäuse aufweisen. Ein Dichtring mag insbesondere an einer Seitenwand eines Dichtelements angeordnet sein. Die Seitenwand mag eine entsprechende Aufnahme für den Dichtring, z.B. eine umlaufende Ringnut, aufweisen. Die Dichtelemente, insbesondere Dichtringe, gleiten bei einer Verschiebung des Ventilschlittens mit diesem mit und über eine Innenkontur oder Innenwand des Ventilgehäuses.

Es ist eine weitere Ausgestaltung, dass zumindest die Dichtabschnitte des Ventilschlittens als konzentrisch zueinander angeordnete, zylinderförmige Schlittenabschnitte ausgebildet sind. Diese Form ermöglicht eine besonders einfach umsetzbare und dichte Aufnahme des Ventilschlittens in dem Ventilgehäuse. Insbesondere mögen nur die Dichtabschnitte den Ventilschlitten in dem Ventilgehäuse führen.

Der Zwischenabschnitt und ggf. der Endbereich, welche einen nicht vernachlässigbaren seitlichen Abstand zu dem Ventilgehäuse aufweisen, mögen ebenfalls zylinderförmig sein oder eine andere Form aufweisen, z.B. eine Quaderform.

Es ist noch eine weitere Ausgestaltung, dass das Ventilgehäuse ein Bedienelement in Form eines gegen das restliche Ventilgehäuse drehbaren Stellrings aufweist, mittel dessen Drehung der Ventilschlitten zwischen seiner ersten Stellung und seiner zweiten Stellung in dem Ventilgehäuse verschiebbar ist. Die Drehung des Stellrings bewirkt also eine axiale Bewegung oder Längsbewegung des Ventilschlittens. Der Stellring ist insbesondere gegen das restliche Ventilgehäuse drehbar. Eine solche Ausgestaltung ist besonders kompakt. Zudem können über den Stellring hohe Kräfte auf den Ventilschlitten aufgebracht werden, was dessen Verschiebung erleichtert.

Es ist eine Weiterbildung, dass der Stellring über eine Nut-Zapfen-Kombination an den Ventilschlitten angebunden ist. Der Stellring mag dazu einen Zapfen aufweisen, der in einer spiralförmigen Nut des Ventilschlittens läuft.

Das Anschließen der externen Fluidleitung, z.B. ein Aufstecken eines Schlauchs, ist insbesondere nur in der zweiten Ventilstellung möglich, da sich andernfalls der Endbereich innerhalb des Stellrings befindet und somit verdeckt ist.

Es ist ferner eine Ausgestaltung, dass der Ventilschlitten ein Bedienelement in Form eines Bedienhebels aufweist, mittel dessen Längsverschiebung der Ventilschlitten zwischen seiner ersten Stellung und seiner zweiten Stellung in dem Ventilgehäuse verschiebbar ist. Eine solche Ausgestaltung ist besonders einfach und robust umsetzbar.

Es ist ferner eine Ausgestaltung, dass das Ventilgehäuse ein Ventilgehäuse mit einem ersten Gehäuseteil und einem zweiten Gehäuseteil ist, das erste Gehäuseteil den Druckanschluss und den ersten Arbeitsleitungsanschluss aufweist und das zweite Gehäuse das Bedienelement aufweist oder führt. Dadurch ergibt sich der Vorteil, dass eine Herstellung des ersten Gehäuseteils in besonders großer Zahl und damit besonders preiswert durchführbar ist. Das zweite Gehäuseteil ermöglicht eine Anpassung an gerätespezifische Eigenheiten, z.B. das Vorsehen eines Stellrings oder einer Führung für einen Bedienhebel.

Die Aufgabe wird auch gelöst durch ein Haushaltsgerät, aufweisend ein Fluidanschlussvorrichtung wie oben beschrieben. Das Haushaltsgerät kann analog zu der Fluidanschlussvorrichtung ausgebildet werden und weist die gleichen Vorteile auf.

Es ist eine Weiterbildung, dass das Haushaltsgerät ein wasserführendes Haushaltsgerät ist. Es ist eine Ausgestaltung, dass das Haushaltsgerät ein Gerät zur Wäschepflege ist, z.B. eine Waschmaschine oder ein Wäschetrockner. Es mag aber auch ein anderes Haushaltsgerät sein, z.B. eine Spülmaschine. Es ist eine Ausgestaltung davon, dass das Gerät zur Wäschepflege ein Wäschetrocknungsgerät ist, da in Wäschetrocknungsgeräten häufig Kondensat anfällt, welches aus dem Gerät abgeführt werden muss. Das Wäschetrocknungsgerät mag ein eigenständiger Wäschetrockner oder ein kombiniertes Wasch/Trocknungs-Gerät sein. Das Wäschetrocknungsgerät mag ein Kondensationstrockner sein, z.B. ein Umlufttrockner. Das Wäschetrocknungsgerät mag eine Wärmepumpe aufweisen.

Es ist eine Weiterbildung, dass das Fluid Wasser ist, insbesondere Kondensat, das Wasser mag Zusätze (z.B. Reinigungsmittel) und/oder Verunreinigungen (z.B. Schmutzpartikel) aufweisen oder mag Frischwasser sein.

Es ist eine Weiterbildung, dass das Haushaltsgerät ein mit dem Druckanschluss der Fluidanschlussvorrichtung fluidisch verbundenes erstes Flüssigkeitsreservoir (z.B. eine bodenseitige Kondensatwanne oder ein Sumpf) und eine an den ersten Arbeitsleitungsanschluss angeschlossene geräteinterne Funktionseinrichtung aufweist. So lässt sich in der ersten Ventilstellung ein Fluidfluss in dem Haushaltsgerät zum Betreiben der Funktionseinrichtung bereitstellen.

Es ist eine Ausgestaltung, dass die geräteinterne Funktionseinrichtung eine Spüleinrichtung ist, insbesondere falls das Fluid Wasser, insbesondere Kondensat, ist. In dieser Ausgestaltung mag ein Teil des Haushaltsgeräts mittels des durch die Fluidanschlussvorrichtung gepumpten Fluids gereinigt werden. Die Spüleinrichtung mag insbesondere einen Spülbehälter oder Kondensatbehälter aufweisen, in den das Kondensat in der ersten Ventilstellung gepumpt wird. Es ist eine Weiterbildung, dass das Haushaltsgerät ein Wäschetrocknungsgerät ist und die Spüleinrichtung eine Abspüleinrichtung zum Abreinigen von Flusen, Haaren o.ä. vorgesehen ist, beispielsweise zum Abspülen von Ablagerungen an einem Flusensieb und/oder an einem Wärmetauscher. Insbesondere mag zum Spülen der Spülbehälter plötzlich geöffnet werden, so dass das Kondensat schwallartig aus ihm abgelassen wird und z.B. über ein Spülrohr zu der abzureinigenden Komponente fällt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Schnittdarstellung in Seitenansicht eine Fluidanschlussvorrichtung für ein Haushaltsgerät gemäß einem ersten Ausführungsbeispiel in einer ersten Ventilstellung;
- Fig.2: zeigt als Schnittdarstellung in Seitenansicht die Fluidanschlussvorrichtung gemäß dem ersten Ausführungsbeispiel in einer zweiten Ventilstellung;
- Fig.3: zeigt als Schnittdarstellung in Seitenansicht eine Fluidanschlussvorrichtung für ein Haushaltsgerät gemäß einem zweiten Ausführungsbeispiel in der zweiten Ventilstellung; und
- Fig.4: zeigt als Schnittdarstellung in Seitenansicht eine Fluidanschlussvorrichtung für ein Haushaltsgerät gemäß einem dritten Ausführungsbeispiel in der zweiten Ventilstellung.

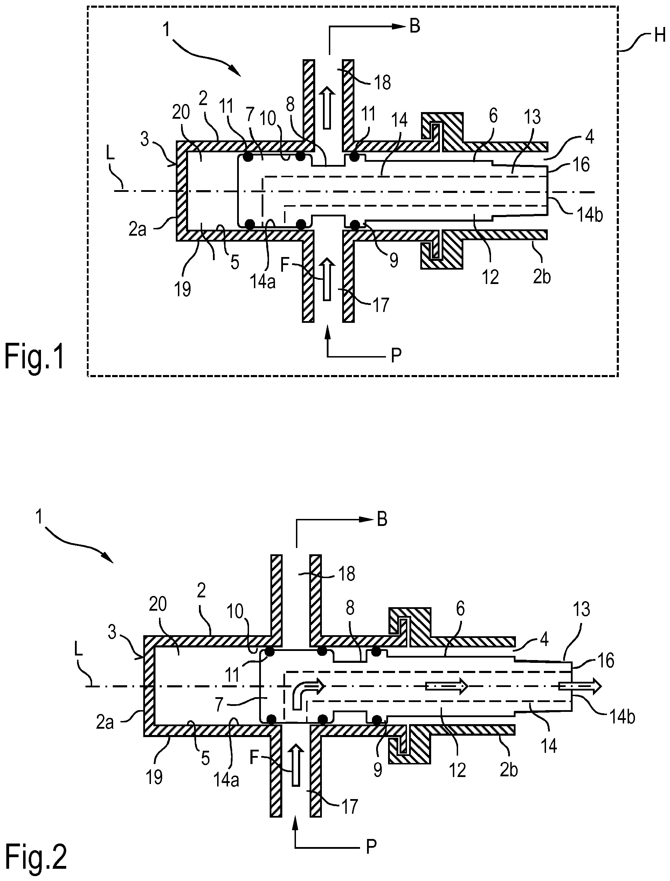

**Fig.1** zeigt als Schnittdarstellung in Seitenansicht eine Fluidanschlussvorrichtung in Form eines 3/2-Wege-Ventils 1 für ein Haushaltsgerät in Form eines Wäschetrockners H in einer ersten Ventilstellung.

Das 3/2-Wege-Ventil 1 weist ein grundsätzlich rohrförmiges Ventilgehäuse 2 auf, das eine geschlossene Stirnfläche 3 und eine offene Stirnfläche 4 aufweist. Eine Innenkontur 5 des Ventilgehäuses 2 ist kreiszylinderförmig. Das 3/2-Wege-Ventil 1 weist eine Längsachse L auf, welche auch der Längsachse der Innenkontur 5 entspricht. In dem Ventilgehäuse 2 ist ein Ventilschlitten 6 längsverschieblich bzw. verschieblich entlang der Längsachse L angeordnet.

Der Ventilschlitten 6 weist eine entlang der Längsachse L längliche Form auf. Er weist an seinem am weitesten durch die offene Stirnfläche 4 in das Ventilgehäuse 2 eingeschobenen Ende einen ersten zylinderförmigen Dichtabschnitt 7 auf. Der erste Dichtabschnitt 7 ist über einen im Vergleich zu der Innenkontur 5 schmalen Zwischenabschnitt 8 des Ventilschlittens 6 konzentrisch von einem zweiten zylinderförmigen Dichtabschnitt 9 beabstandet. Der erste Dichtabschnitt 7 ist länger als der zweite Dichtabschnitt 9. Während der erste Dichtabschnitt 7 an seiner Seitenwand 10 durch zwei zueinander längsbeabstandete Dichtringe 11 gegen die Innenkontur 5 abgedichtet ist, ist der zweite Dichtabschnitt 9 nur durch einen Dichtring 11 gegen die Innenkontur 5 abgedichtet.

Zu seinem anderen Ende hin geht von dem zweiten Dichtabschnitt 9 in Längsrichtung ein weiterer Zwischenabschnitt 12 ab, der in einen sich konusförmig verjüngenden Endabschnitt oder Endbereich 13 übergeht. Der weitere Zwischenabschnitt 12 ist hier locker bzw. mit großem Spalt in der Innenkontur 5 untergebracht.

In der Seitenwand 10 des ersten Dichtabschnitts 7 zwischen den beiden zugehörigen Dichtringen 11 mündet eine erste Öffnung 14a eines von dort durch den Ventilschlitten 6 geführten Kanals 14 (gestrichelt eingezeichnet). Die zweite Öffnung 14b des Kanals 14 befindet sich in einer Stirnfläche 16 des Endbereichs 13. Der Endbereich 13 mag auch als ein Schlauchanschluss oder als ein zweiter Arbeitsleitungsanschluss angesehen oder bezeichnet werden.

In dem Ventilgehäuse 2 sind auf gleicher Höhe in Bezug auf die Längsachse L bzw. an einem gleichen Längsabschnitt ein Druckanschluss 17 und ein erster Arbeitsleitungsanschluss 18 angeordnet, die durch eine Seitenwand 19 des Ventilgehäuses 2 in den durch die Innenkontur 5 begrenzten Innenraum 20 führen. Der Druckanschluss 17 und der erste Arbeitsleitungsanschluss 18 sind in Bezug auf die Längsachse L auf entgegengesetzten Positionen angeordnet. Der Druckanschluss 17 mag z.B. mit einer Druckseite einer Pumpe P fluidisch verbunden sein, der erste Arbeitsleitungsanschluss 18 z.B. mit einem Spülbehälter B.

Das Ventilgehäuse 2 ist hier zweistückig ausgebildet, und zwar mit einem ersten Gehäuseteil 2a, das den Druckanschluss 17 und den ersten Arbeitsleitungsanschluss 18 aufweist, und einem zweiten Gehäuseteil 2b. Das Ventilgehäuse 2 kann grundsätzlich aber z.B. auch einstückig ausgebildet sein.

In der gezeigten ersten Ventilstellung befindet sich der Zwischenabschnitt 12 in einem gleichen Längsabschnitt wie der Druckanschluss 17 und der erste Arbeitsleitungsanschluss 18. Da durch den Druckanschluss 17 Fluid F in das Volumen zwischen dem Zwischenabschnitt 12 und der Außenkontur 5 strömen kann und weiter aus dem ersten Arbeitsleitungsanschluss 18 wieder abfließen kann, ist der Druckanschluss 17 mit dem ersten Arbeitsleitungsanschluss 18 fluidisch verbunden. Aufgrund der Dichtringe 11 kann das Fluid F jedoch weder durch die erste Öffnung 14a in den Kanal 14 noch an dem zweiten Dichtabschnitt 9 vorbei nach außen gelangen.

**Fig.2** zeigt die Fluidanschlussvorrichtung 1 mit dem Ventilschlitten 6 in einer zweiten Ventilstellung. In der zweiten Ventilstellung ist der Ventilschlitten 6 im Vergleich zu der ersten Ventilstellung entlang der Längsachse L teilweise aus dem Ventilgehäuse 2 herausgezogen, und zwar so weit, dass der Endbereich 13 aus dem Ventilgehäuse 2 vorragt oder vorsteht. Der Ventilschlitten 6 kann grundsätzlich manuell oder motorisch bewegt werden, insbesondere entlang der Längsachse L verschoben werden.

In der zweiten Ventilstellung ist der Ventilschlitten 6 so in dem Ventilgehäuse 2 positioniert, dass die erste Öffnung 14a des Kanals 14 des Ventilschlittens 6 mit dem Druckanschluss 17 fluidisch verbunden ist. Ein parasitärer Fluid-Nebenstrom wird durch die beiden Dichtringe 11 des ersten Dichtabschnitts 7 verhindert. Folglich kann das Fluid F von dem Druckanschluss 17 durch den Kanal 14 zu der Stirnseite 16 des Endbereichs 13 fließen, in welcher Stirnfläche 16 sich die zweite Öffnung 14b befindet.

Nur in der zweiten Ventilstellung kann eine externe Fluidleitung, z.B. ein Schlauch (o. Abb.), auf den Endbereich 13 aufgesteckt werden. Dies wird durch die konusförmige Ausgestaltung des Endbereichs 13 unterstützt, der als ein Schlauchstutzen ausgebildet ist.

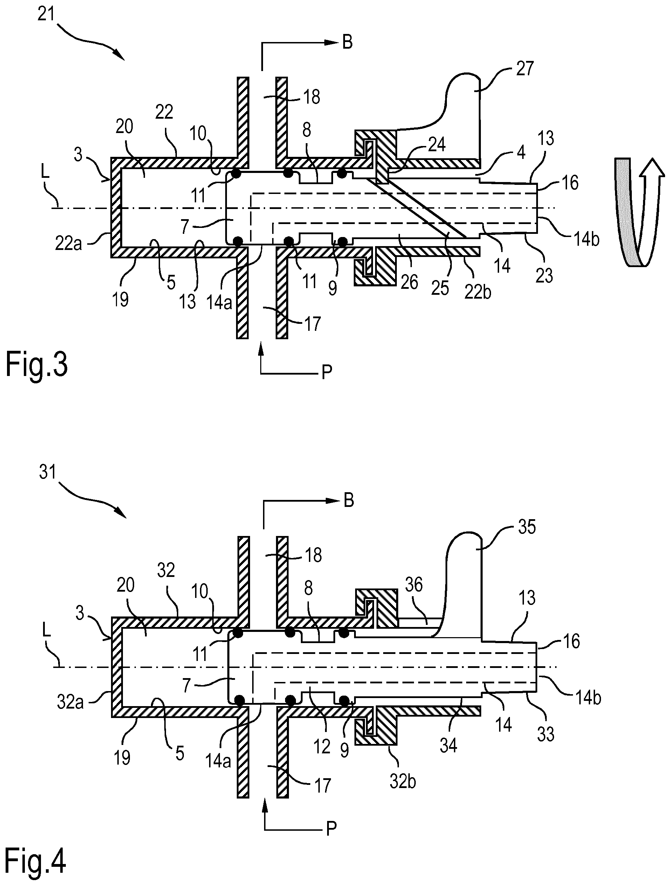

**Fig.3** zeigt als Schnittdarstellung in Seitenansicht eine Fluidanschlussvorrichtung 21 in Form eines 3/2-Wege-Ventils für ein Haushaltsgerät H gemäß einem zweiten Ausführungsbeispiel in der zweiten Ventilstellung. Die Fluidanschlussvorrichtung 21 ist ähnlich zu der Fluidanschlussvorrichtung 1 aufgebaut, wobei nun ein zweites Gehäuseteil 22b des Ventilgehäuses 22 gegen ein erstes Gehäuseteil 22a drehbar ist. Das zweite Gehäuseteil 22b dient als ein Stellring zur Längsverschiebung des Ventilschlittens 23. Dazu weist das zweite Gehäuseteil 22b innenseitig einen Zapfen 24 auf, der in einer spiralförmigen Nut 25 in dem weiteren Zwischenabschnitt 26 des Ventilschlittens 23 läuft. Mittel einer Drehung des zweiten Gehäuseteils 22b (wie durch den ringförmigen Pfeil angedeutet) kann der Ventilschlitten 23 zwischen seiner ersten Stellung und seiner zweiten Stellung in dem Ventilgehäuse 22 verschoben werden. Zur verbesserten Drehbarkeit weist das zweite Gehäuseteil 22b außenseitig einen Flügel 27 auf.

**Fig.4** zeigt als Schnittdarstellung in Seitenansicht eine Fluidanschlussvorrichtung 31 für ein Haushaltsgerät H gemäß einem dritten Ausführungsbeispiel in der zweiten Ventilstellung. Die Fluidanschlussvorrichtung 31 ist ähnlich zu der Fluidanschlussvorrichtung 1 aufgebaut. Der in dem Ventilgehäuse 32 untergebrachte Ventilschlitten 33 ist jedoch nun manuell mittels eines an dem weiteren Zwischenabschnitt 34 des Ventilschlittens 32 angebrachten Bedienhebels 35 zwischen seiner ersten Stellung und seiner zweiten Stel lung verschiebbar. Der Bedienhebel 34 wird dazu mittels einer schlitzartig in Längsrichtung ausgebildeten Führung 36 in dem zweiten Gehäuseteil 32b geführt. Das erste Gehäuseteil 32a ist identisch zu dem ersten Gehäuseteil 22a und dem ersten Gehäuseteil 2a aufgebaut.

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: 3/2-Wegeventil
- 2: Ventilgehäuse
- 2a: Erstes Gehäuseteil
- 2b: Zweites Gehäuseteil
- 3: Geschlossene Stirnfläche
- 4: Offene Stirnfläche
- 5: Innenkontur des Ventilgehäuses
- 6: Ventilschlitten
- 7: Erster Dichtabschnitt
- 8: Zwischenabschnitt
- 9: Zweiter Dichtabschnitt
- 10: Seitenwand des ersten Dichtabschnitts
- 11: Dichtring
- 12: Weiterer Zwischenabschnitt
- 13: Endbereich
- 14: Kanal
- 14a: Erste Öffnung des Kanals
- 14b: Zweite Öffnung des Kanals
- 16: Stirnfläche des Endbereichs
- 17: Druckanschluss
- 18: Erster Arbeitsleitungsanschluss
- 19: Seitenwand des Ventilgehäuses
- 20: Innenraum des Ventilgehäuses
- 21: 3/2-Wegeventil
- 22: Ventilgehäuse
- 22a: Erstes Gehäuseteil
- 22b: Zweites Gehäuseteil
- 23: Ventilschlitten
- 24: Zapfen
- 25: Nut
- 26: Weiterer Zwischenabschnitt
- 27: Flügel
- 31: 3/2-Wegeventil
- 32: Ventilgehäuse
- 32a: Erstes Gehäuseteil
- 32b: Zweites Gehäuseteil
- 33: Ventilschlitten
- 34: Weiterer Zwischenabschnitt
- 35: Bedienhebel
- 36: Führung
- B: Spülbehälter
- F: Fluid
- H: Wäschetrockner
- L: Längsachse
- P: Pumpe

## Patentansprüche

1. Fluidanschlussvorrichtung (1; 21; 31) für ein Haushaltsgerät (H), aufweisend
- einen Druckanschluss (17),
- einen ersten Arbeitsleitungsanschluss (18) und
- einen zweiten Arbeitsleitungsanschluss (13),
wobei
- der erste Arbeitsleitungsanschluss (18) an einer Seitenwand (19) eines Ventilgehäuses (2; 22; 32) angeordnet ist,
- in dem Ventilgehäuse (2; 22; 32) ein Ventilschlitten (6; 23; 33) angeordnet ist, der einen inneren Kanal (14) aufweist, welcher Kanal (14) eine seitliche erste Öffnung (14a) und eine zweite Öffnung (14b) an einer Stirnfläche (16) des Ventilschlittens (6; 23; 33) aufweist,
wobei
- der Ventilschlitten (6; 23; 33) in einer ersten Ventilstellung so weit in das Ventilgehäuse (2; 22; 32) eingeschoben ist, dass der Druckanschluss (17) mit dem ersten Arbeitsleitungsanschluss (18) fluidisch verbunden ist und der Endbereich (13) des Ventilschlittens (6; 23; 33) zumindest teilweise in das Ventilgehäuse (2; 22; 32) eingeführt ist,
**dadurch gekennzeichnet, dass**
- der Druckanschluss (17) in der ersten Ventilstellung von dem zweiten Arbeitsleitungsanschluss (13) getrennt ist,
- der Ventilschlitten (6; 23; 33) in einer zweiten Ventilstellung so in dem Ventilgehäuse (2; 22; 32) positioniert ist, dass die erste Öffnung (14a) des Ventilschlittens (6; 23; 33) mit dem Druckanschluss (17) fluidisch verbunden und der Druckanschluss (17) von dem ersten Arbeitsleitungsanschluss (18) getrennt ist und der Endbereich (13) des Ventilschlittens (6; 23; 33) aus dem Ventilgehäuse (2; 22; 32) vorragt,
- der Druckanschluss (17) an der Seitenwand (19) des Ventilgehäuses (2; 22; 32) angeordnet ist, und
- der die zweite Öffnung (14b) aufweisende Endbereich des Ventilschlittens (6; 23; 33) als der zweite Arbeitsleitungsanschluss (13) ausgebildet ist.

2. Fluidanschlussvorrichtung (1; 21; 31) nach Anspruch 1, wobei
- der Ventilschlitten (6; 23; 33) einen ersten Dichtabschnitt (7) und einen zweiten Dichtabschnitt (9) aufweist, die den Ventilschlitten (6; 23; 33) gegen das Ventilgehäuse (2; 22; 32) abdichten,
- der erste Dichtabschnitt (7) längsbeabstandet zu dem zweiten Dichtabschnitt (9) und in größerer Entfernung zu dem die zweite Öffnung (14b) aufweisenden Endbereich (13) als der zweite Dichtabschnitt (9) angeordnet ist,
- zwischen den beiden Dichtabschnitten (7; 9) ein gegenüber dem Ventilgehäuse (2; 22; 32) schmaler Zwischenabschnitt (8) des Ventilschlittens (6; 23; 33) vorhanden ist,
- die erste Öffnung (14a) des Ventilschlittens (6; 23; 33) in den ersten Dichtabschnitt (7) mündet und
- in der ersten Ventilstellung der Zwischenabschnitt (8) sich in einem gleichen Längsbereich befindet wie der Druckanschluss (17) und der erste Arbeitsleitungsanschluss (18).

3. Fluidanschlussvorrichtung (1; 21; 31) nach Anspruch 2, wobei die Dichtabschnitte (7, 9) als konzentrisch zueinander angeordnete, zylinderförmige Schlittenabschnitte ausgebildet sind.

4. Fluidanschlussvorrichtung (1; 21; 31) nach einem der Ansprüche 2 bis 3, wobei die erste Öffnung (14a) des Ventilschlittens (6; 23; 33) in eine Seitenwand (10) eines Dichtabschnitts (7) mündet.

5. Fluidanschlussvorrichtung (1; 21; 31) nach Anspruch 4, wobei an der Seitenwand (10) des ersten Dichtabschnitts (7) zwei längsbeabstandete Dichtelemente (11) vorhanden sind, zwischen denen die erste Öffnung (14a) des Ventilschlittens (6; 23; 33) in die Seitenwand (10) mündet.

6. Fluidanschlussvorrichtung (21) nach einem der vorhergehenden Ansprüche, bei dem das Ventilgehäuse (22) ein Bedienelement in Form eines Stellrings (22b) aufweist, mittel dessen Drehung der Ventilschlitten (23) zwischen seiner ersten Stellung und seiner zweiten Stellung in dem Ventilgehäuse (22) verschiebbar ist.

7. Fluidanschlussvorrichtung (31) nach einem der vorhergehenden Ansprüche, bei dem der Ventilschlitten (33) ein Bedienelement in Form eines Bedienhebels (35) aufweist, mittel dessen Längsverschiebung der Ventilschlitten (33) zwischen seiner ersten Stellung und seiner zweiten Stellung in dem Ventilgehäuse (32) verschiebbar ist.

8. Fluidanschlussvorrichtung (1; 21; 31) nach einem der Ansprüche 6 oder 7, bei dem das Ventilgehäuse (2; 22; 32) ein Ventilgehäuse mit einem ersten Gehäuseteil (2a; 22a; 32a) und einem zweiten Gehäuseteil (2b; 22b; 32b) ist, das erste Gehäuseteil (2a; 22a; 32a) den Druckanschluss (17) und den ersten Arbeitsleitungsanschluss (18) aufweist und das zweite Gehäuseteil (2b; 22b; 32b) das Bedienelement (22b; 35) aufweist oder führt.

9. Haushaltsgerät (H), aufweisend
- ein Fluidanschlussvorrichtung (1; 21; 31) nach einem der vorhergehenden Ansprüche,
- ein mit dem Druckanschluss (17) der Fluidanschlussvorrichtung (1; 21; 31) fluidisch verbundenes erstes Flüssigkeitsreservoir und
- eine an den ersten Arbeitsleitungsanschluss (18) angeschlossene geräteinterne Funktionseinrichtung (B).

10. Haushaltsgerät (H) nach Anspruch 9, wobei das Haushaltsgerät (h) ein Wäschetrocknungsgerät ist und die geräteinterne Funktionseinrichtung (B) eine Spüleinrichtung ist.

## Claims

1. Fluid connection apparatus (1; 21; 31) for a household appliance (H), having
- a pressure connection (17),
- a first operating line connection (18) and
- a second operating line connection (13),
wherein
- the first operating line connection (18) is arranged on a side wall (19) of a valve housing (2; 22; 32),
- a valve carriage (6; 23; 33) is arranged in the valve housing (2; 22; 32), said valve carriage (6; 23; 33) having an inner channel (14), which channel (14) has a first opening (14a) on the side and a second opening (14b) on an end face (16) of the valve carriage (6; 23; 33),
wherein
- the valve carriage (6; 23; 33), in a first valve position, is inserted so far into the valve housing (2; 22; 32) that the pressure connection (17) is fluidically connected to the first operating line connection (18) and the end region (13) of the valve carriage (6; 23; 33) is at least partially introduced into the valve housing (2; 22; 32),
**characterised in that,**
- in the first valve position, the pressure connection (17) is separated from the second operating line connection (13),
- in a second valve position, the valve carriage (6; 23; 33) is positioned in the valve housing (2; 22; 32) such that the first opening (14a) of the valve carriage (6; 23; 33) is fluidically connected to the pressure housing (17) and the pressure connection (17) is separated from the first operating line connection (18) and the end region (13) of the valve carriage (6; 23; 33) protrudes from the valve housing (2; 22; 32),
- the pressure connection (17) is arranged on the side wall (19) of the valve housing (2; 22; 32), and
- the end region of the valve carriage (6; 23; 33) that has the second opening (14b) is embodied as the second operating line connection (13).

2. Fluid connection apparatus (1; 21; 31) according to claim 1, wherein
- the valve carriage (6; 23; 33) has a first seal section (7) and a second seal section (9), which seal off the valve carriage (6; 23; 33) from the valve housing (2; 22; 32),
- the first seal section (7) is arranged such that it is spaced apart longitudinally in relation to the second seal section (9) and at a greater distance from the end region (13) that has the second opening (14b) than the second seal section (9),
- an intermediate section (8) of the valve carriage (6; 23; 33) which is narrow compared to the valve housing (2; 22; 32) is present between the two seal sections (7; 9),
- the first opening (14a) of the valve carriage (6; 23; 33) opens into the first seal section (7) and,
- in the first valve position, the intermediate section (8) is located in the same longitudinal region as the pressure connection (17) and the first operating line connection (18).

3. Fluid connection apparatus (1; 21; 31) according to claim 2, wherein the seal sections (7, 9) are embodied as cylindrical carriage sections that are arranged concentrically in relation to one another.

4. Fluid connection apparatus (1; 21; 31) according to one of claims 2 to 3, wherein the first opening (14a) of the valve carriage (6; 23; 33) opens into a side wall (10) of a sealing section (7).

5. Fluid connection apparatus (1; 21; 31) according to claim 4, wherein two longitudinally spaced seal elements (11) are present on the side wall (10) of the first seal section (7), between which seal elements (11) the first opening (14a) of the valve carriage (6; 23; 33) opens into the side wall (10).

6. Fluid connection apparatus (21) according to one of the preceding claims, in which the valve housing (22) has an operating element in the form of an adjusting ring (22b), by means of the rotation of which the valve carriage (23) can be displaced between its first position and its second position in the valve housing (22).

7. Fluid connection apparatus (31) according to one of the preceding claims, in which the valve carriage (33) has an operating element in the form of an operating lever (35), by means of the longitudinal displacement of which the valve carriage (33) can be displaced between its first position and its second position in the valve housing (32).

8. Fluid connection apparatus (1; 21; 31) according to one of claims 6 or 7, in which the valve housing (2; 22; 32) is a valve housing with a first housing part (2a; 22a; 32a) and a second housing part (2b; 22b; 32b), the first housing part (2a; 22a; 32a) has the pressure connection (17) and the first operating line connection (18) and the second housing part (2b; 22b; 32b) has or guides the operating element (22b; 35).

9. Household appliance (H), having
- a fluid connection apparatus (1; 21; 31) according to one of the preceding claims, a first liquid reservoir fluidically connected to the pressure connection (17) of the fluid connection apparatus (1; 21; 31) and
- an appliance-internal function facility (B) connected to the first operating line connection (18).

10. Household appliance (H) according to claim 9, wherein the housing appliance (H) is a laundry drying appliance and the appliance-internal function facility (B) is a flushing facility.

## Revendications

1. Dispositif de raccordement de fluide (1 ; 21 ; 31) pour un appareil ménager (H), présentant
- un raccord de pression (17),
- un premier raccord de conduite de travail (18), et
- un deuxième raccord de conduite de travail (13),
dans lequel
- le premier raccord de conduite de travail (18) est disposé sur une paroi latérale (19) d'un corps de vanne (2 ; 22 ; 32) ;
- une coulisse de vanne (6 ; 23 ; 33) est disposée dans le corps de vanne (2 ; 22 ; 32), laquelle présente un canal intérieur (14), lequel canal (14) présente un premier orifice latéral (14a) et un deuxième orifice (14b) sur une surface frontale (16) de la coulisse de vanne (6 ; 23 ; 33),
dans lequel
- la coulisse de vanne (6 ; 23 ; 33), dans une première position de la vanne, est insérée dans le corps de vanne (2 ; 22 ; 32) de manière à ce que le raccord de pression (17) soit fluidiquement relié au premier raccord de conduite de travail (18) et que la partie terminale (13) de la coulisse de vanne (6 ; 23 ; 33) soit introduite au moins en partie dans le corps de vanne (2 ; 22 ; 32),
**caractérisé en ce que**
- le raccord de pression (17), dans la première position de la vanne, est séparé du deuxième raccord de conduite de travail (13),
- la coulisse de vanne (6 ; 23 ; 33), dans une deuxième position de la vanne, est positionnée dans le corps de vanne (2 ; 22 ; 32) de manière à ce que le premier orifice (14a) de la coulisse de vanne (6 ; 23 ; 33) soit fluidiquement relié au raccord de pression (17) et que le raccord de pression (17) soit séparé du premier raccord de conduite de travail (18) et que la partie terminale (13) de la coulisse de vanne (6 ; 23 ; 33) fasse saillie hors du corps de vanne (2 ; 22 ; 32),
- le raccord de pression (17) est disposé sur la paroi latérale (19) du corps de vanne (2 ; 22 ; 32), et
- la partie terminale de la coulisse de vanne (6 ; 23 ; 33) présentant le deuxième orifice (14b) est réalisé en tant que le deuxième raccord de conduite de travail (13).

2. Dispositif de raccordement de fluide (1 ; 21 ; 31) selon la revendication 1, dans lequel
- la coulisse de vanne (6 ; 23 ; 33) présente une première section d'étanchéité (7) et une deuxième section d'étanchéité (9), lesquelles étanchéifient la coulisse de vanne (6 ; 23 ; 33) contre le corps de vanne (2 ; 22 ; 32),
- la première section d'étanchéité (7) est disposée à distance longitudinale de la deuxième section d'étanchéité (9) et à plus grande distance de la partie terminale (13) présentant le deuxième orifice (14a) que la deuxième section d'étanchéité (9),
- une section intermédiaire (8) de la coulisse de vanne (6 ; 23 ; 33) plus étroite par rapport au corps de vanne (2 ; 22 ; 32) est présente entre les deux sections d'étanchéité (7 ; 9),
- le premier orifice (14a) de la coulisse de vanne (6 ; 23 ; 33) débouche dans la première section d'étanchéité (7), et
- dans la première position de la vanne, la section intermédiaire (8) se trouve dans la même partie longitudinale que le raccord de pression (17) et le premier raccord de conduite de travail (18).

3. Dispositif de raccordement de fluide (1 ; 21 ; 31) selon la revendication 2, dans lequel les sections d'étanchéité (7, 9) sont réalisées comme sections de coulisse cylindriques disposées concentriquement l'une par rapport à l'autre.

4. Dispositif de raccordement de fluide (1 ; 21 ; 31) selon l'une quelconque des revendications 2 à 3, dans lequel le premier orifice (14a) de la coulisse de vanne (6, 23, 33) débouche dans une paroi latérale (10) d'une section d'étanchéité (7).

5. Dispositif de raccordement de fluide (1 ; 21 ; 31) selon la revendication 4, dans lequel sur la paroi latérale (10) de la première section d'étanchéité (7), deux éléments d'étanchéité (11) distancés longitudinalement sont présents entre lesquels le premier orifice (14a) de la coulisse de vanne (6 ; 23 ; 33) débouche dans la paroi latérale (10).

6. Dispositif de raccordement de fluide (21) selon l'une quelconque des revendications précédentes, dans lequel le corps de vanne (22) présente un élément de commande sous forme d'une bague de réglage (22b) au moyen de la rotation de laquelle la coulisse de vanne (23) peut être coulissée entre sa première position et sa deuxième position dans le corps de vanne (22).

7. Dispositif de raccordement de fluide (31) selon l'une quelconque des revendications précédentes, dans lequel la coulisse de vanne (33) présente un élément de commande sous forme d'un levier de commande (35) au moyen du déplacement longitudinal duquel la coulisse de vanne (33) peut être coulissée entre sa première position et sa deuxième position dans le corps de vanne (32).

8. Dispositif de raccordement de fluide (1 ; 21 ; 31) selon l'une quelconque des revendications 6 ou 7, dans lequel le corps de vanne (2 ; 22 ; 32) est un corps de vanne comprenant une première partie de corps (2a ; 22a ; 32a) et une deuxième partie de corps (2b ; 22b ; 32b), dans lequel la première partie de corps (2a ; 22a ; 32a) présente le raccord de pression (17) et le premier raccord de conduite de travail (18), et la deuxième partie de corps (2b ; 22b ; 32b) présente ou guide l'élément de commande (22b ; 35).

9. Appareil ménager (H) présentant
- un dispositif de raccordement de fluide (1 ; 21 ; 31) selon l'une quelconque des revendications précédentes,
- un premier réservoir de liquide relié fluidiquement au raccord de pression (17) du dispositif de raccordement de fluide (1 ; 21 ; 31), et
- un dispositif fonctionnel (B) interne à l'appareil, relié au premier raccord de conduite de travail (18).

10. Appareil ménager (H) selon la revendication 9, dans lequel l'appareil ménager (H) est un sèche-linge et le dispositif fonctionnel (B) interne à l'appareil est un dispositif de lavage.
